# EUROPÄISCHE PATENTSCHRIFT

(11) **EP 2 524 267 B1**
(45) Veröffentlichungstag und Bekanntmachung des Hinweises auf die Patenterteilung: **23.12.2015**
(21) Anmeldenummer: 10798275.3
(22) Anmeldetag: 29.12.2010
(51) Int. Cl.: G05B 19/4097

(54) **SYSTEM AUS ENTWICKLUNGSUMGEBUNGEN UND MASCHINENSTEUERUNGEN**
SYSTEM COMPRISING DEVELOPMENT ENVIRONMENTS AND MACHINE CONTROLS
SYSTÈME COMPOSÉ D'ENVIRONNEMENTS DE DÉVELOPPEMENT ET DE COMMANDES MACHINE

(30) Priorität: 13.01.2010 DE 102010004473
(43) Veröffentlichungstag der Anmeldung: 21.11.2012
(73) Patentinhaber: KUKA Roboter GmbH, 86165 Augsburg (DE)
(72) Erfinder: Keibel, Andreas, 86161 Augsburg (DE); Goroll, Torsten, 85221 Dachau (DE)
(74) Vertreter: Schlotter, Alexander Carolus Paul
(86) Internationale Anmeldenummer: PCT/EP2010/007961
(87) Internationale Veröffentlichungsnummer: WO 2011/085799

(56) Entgegenhaltungen:
- EP-A1- 1 315 057
- US-A1- 2008 050 192

## Beschreibung

Die vorliegende Erfindung betrifft ein System mit einer oder mehreren Entwicklungsumgebungen für die Erstellung von Maschinenprogrammen, insbesondere Roboterprogrammen, und einer oder mehreren Maschinensteuerungen, insbesondere für die Steuerung wenigstens eines Roboters. Sie betrifft ferner ein Verfahren zur Erstellung von Maschinenprogrammen bzw. zur Steuerung einer oder mehrerer Maschinen, welches mit einem derartigen System ausgeführt wird, sowie ein Computerprogrammprodukt mit Programmcode, der ein derartiges Verfahren ausführt, wenn er in einem derartigen System abgearbeitet wird. Das System, das Verfahren sowie das Computerprogrammprodukt sind insbesondere für die Erstellung von Roboterprogrammen und für die Steuerung von Robotern geeignet, können jedoch auch für eine Vielzahl von anderen Maschinen, insbesondere in der Automatisierungstechnik, eingesetzt werden.

Die Arbeitsumgebung und der Prozess, welche üblicherweise zur Erstellung eines Programms zur Steuerung einer komplexen Maschine wie etwa eines Industrieroboters oder einer Werkzeugmaschine verwendet werden, bestehen aus einer Vielzahl von Komponenten bzw. Schritten. Diese stellen sich am Beispiel der Erzeugung eines Steuerungsprogramms für einen Industrieroboter gemäß der internationalen Anmeldung WO 2009/149805 A1 wie folgt dar:
Zunächst wird in einem Simulationsprogramm ein Modell der Automatisierungszelle erstellt, in welcher der Roboter später operieren soll. Das Modell umfasst beispielsweise den Roboter selbst mit Werkzeug, eine Transport- bzw. Aufspanneinrichtung für Werkstücke, die Werkstücke sowie Zusatzeinrichtungen wie Werkzeugwechselstationen oder Materialzuführeinrichtungen. In dem Modell der Automatisierungszelle wird die Bahn, welche ein Werkzeug zum Beispiel entlang einer Werkstückkontur abfahren soll - beispielsweise eine Schweißbahn -, erstellt. Sodann werden die Bewegungen des Roboters mit einer virtuellen Robotersteuerung derart erzeugt und simuliert, dass das Werkzeug der zuvor erstellten Werkzeugbahn folgt. Danach werden die so erstellten Bewegungen des Roboters über einen robotersteuerungsabhängigen Algorithmus in ein konkretes Roboter-Steuerungsprogramm transformiert. Dieses wird nun manuell auf die Steuerung des tatsächlichen Roboters übertragen und mit aus der realen Automatisierungszelle gewonnenen Daten getestet.

Dieses Vorgehen hat den Nachteil, dass die Daten in der Simulationsumgebung von den Daten aus der realen Automatisierungszelle abweichen können. Als Folge muss das so erstellte Roboter-Steuerungsprogramm vor dem tatsächlichen Praxiseinsatz oft noch korrigiert werden. Dies geschieht beispielsweise durch sogenanntes "Nachteachen", wobei eine oder mehrere Positionen auf der Roboterbahn mit dem Roboter manuell angefahren werden, um der Steuerung diese Positionen bekannt zu machen und auf diese Weise inkorrekte Positionen des erstellten Roboterprogramms zu überschreiben. Außerdem veralten die Daten in der Simulationsumgebung, da Änderungen in der Realität nicht in die Simulationsumgebung zurückübertragen werden.

Die US 2008/0050192 A1 offenbart einen automatischen Programmgenerator zum Steuern einer Fertigung einer Kurbelwelle mittels einer NC-Werkzeugmaschine. Die Steuerung kommandiert eine Rollschneidemaschine, welche Achszapfen einer Kurbelwelle schneidet. Eine Fertigungsqualität lässt sich auf Basis der Geradheit der Druckfläche eines gefertigten Achszapfens beurteilen. Der Programmgenerator adaptiert das Steuerungsprogramm automatisch, abhängig von Qualitätsinformationen, die von der Rollschneidemaschine reflektiert werden.

Die EP 1 315 057 A1 offenbart eine Vorrichtung und ein Verfahren zur Erstellung und/oder Änderung von Programmen oder Tabellen von NC-Werkzeugmaschinen. Zunächst werden in einem Konfigurationsbetrieb Auswahllisten konfiguriert, wobei das Konfigurationsdatum zumindest eine ausführbare Selektionsanweisung enthält, deren Bearbeitungsdaten in einer Datenbank hinterlegt sind. Danach werden in einem Programmierbetrieb die Auswahllisten auf einer Anzeigeeinrichtung als Eingabefelder für Bearbeitungseinheiten mit zulässigen Bearbeitungsdaten angezeigt.

Aufgabe der vorliegenden Erfindung ist es, die Erstellung eines Maschinenprogramms zu verbessern.

Diese Aufgabe wird durch ein System mit den Merkmalen des Anspruchs 1 gelöst. Weitere vorteilhafte Weiterbildungen der Erfindung ergeben sich aus den Unteransprüchen. Anspruch 12 stellt ein entsprechendes Verfahren, Anspruch 13 ein entsprechendes Computerprogrammprodukt mit Programmcode unter Schutz.

Ein erfindungsgemäßes System umfasst eine oder mehrere Entwicklungsumgebungen sowie eine oder mehrere Maschinensteuerungen für jeweils eine oder mehrere reale Maschinen.

Unter einer Entwicklungsumgebung wird dabei insbesondere eine Arbeitsumgebung verstanden, welche Komponenten umfasst, die von einem Entwickler üblicherweise zur Entwicklung von Programmen, insbesondere Maschinenprogrammen, verwendet werden, beispielsweise Simulationsprogramme, Code-Generatoren und/oder textuelle oder grafische Editoren zur Bearbeitung von Maschinenprogrammen oder anderen Daten.

Ein Maschinenprogramm kann insbesondere eine Folge von Steueranweisungen für eine programmgesteuerte Maschine, vorzugsweise einen Industrieroboter oder eine CNC-Werkzeugmaschine, umfassen.

Daten in der Entwicklungsumgebung können beispielsweise Maschinen-Konfigurationsdaten sein, d. h. Daten, die etwa die Kinematik, Lage, Abmessungen, Ausstattung und/oder Komponenten der Maschine sowie deren Zusammenwirken und/oder mechanische und/oder elektrische Leistungsdaten der Maschine beschreiben. Weiterhin können solche Daten Modelldaten über den Aufbau der Automatisierungszelle sowie der zu bearbeitenden Werkstücke sein, gegeben etwa durch ihre Koordinaten in einem Weltkoordinatensystem. Die Daten können auch erstellte Roboter-Steuerungsprogramme mit ihren einzelnen auszuführenden Schritten umfassen.

Erfindungsgemäß wird in einer Entwicklungsumgebung ein, vorzugsweise genaues und/oder aktuelles, Abbild einer oder mehrerer Maschinensteuerungen bereitgestellt. Der Begriff "Abbild" bedeutet, dass Daten der jeweiligen Maschinensteuerung, in vorzugsweise möglichst identischer Weise, auch in der Entwicklungsumgebung vorliegen. Dazu werden Daten aus der Maschinensteuerung - wie Maschinen-Konfigurationsdaten oder Geometriedaten der Automatisierungszelle - bevorzugt mit möglichst hoher (etwa numerischer) Präzision, d. h. genau, und/oder mit möglichst geringer zeitlicher Verzögerung, d. h. aktuell, in die Entwicklungsumgebung übertragen. Das Abbild der Maschinensteuerung in der Entwicklungsumgebung kann vorzugsweise möglichst oft oder möglichst rasch nach in der Maschinensteuerung aufgetretenen Änderungen aktualisiert werden.

Die Aktualisierungsrate bzw. die maximale Zeitverzögerung der Aktualisierung nach einer Änderung beträgt beispielsweise 1 s und vorzugsweise 10 ms. Die Genauigkeit des Abbildes wird beispielsweise durch die prozentuale, betragsmäßige Abweichung einer Modellantwort auf eine Eingabe in einer Entwicklungsumgebung, in welcher eine Maschinensteuerung abgebildet ist, von einer Systemantwort auf dieselbe Eingabe in der Maschinensteuerung bestimmt, wobei die Abweichung beispielsweise höchstens 10 % und vorzugsweise höchstens 2 % beträgt.

Daten werden erfindungsgemäß regelmäßig von wenigstens einer Entwicklungsumgebung zu wenigstens einer Maschinensteuerung und/oder von wenigstens einer Maschinensteuerung zu wenigstens einer Entwicklungsumgebung übertragen.

Dabei können Daten zeitlich diskret, insbesondere ereignisabhängig, etwa bei einer Änderung von in einer Maschinensteuerung oder einer Entwicklungsumgebung vorliegenden Daten oder eines Zustandes einer gesteuerten Maschine oder deren Umgebung, übertragen werden, um das Datentransferaufkommen zu reduzieren. Gleichermaßen können Daten auch zeitlich kontinuierlich oder annähernd kontinuierlich, insbesondere mit sehr kurzen Zeitabständen, übertragen werden, um eine hohe Aktualität der Daten zu gewährleisten. Beide Aspekte können auch miteinander kombiniert sein, indem Daten einerseits in vorgegebenen periodischen Zeitabständen und andererseits zusätzlich ereignisabhängig, übertragen werden, um ein günstiges Verhältnis aus Datentransferaufkommen und Aktualität aufzuweisen.

Die Datenübertragung kann in beiden Richtungen erfolgen. So können beispielsweise Maschinen-Konfigurationsdaten von der Maschinensteuerung zur Entwicklungsumgebung und nach Änderungen wieder zurück übertragen werden. Dieses Vorgehen wird als "Machine Data Roundloading" bezeichnet.

Auch Maschinenprogramme können in beiden Richtungen übertragen werden: z. B. nach ihrer Erstellung in der Entwicklungsumgebung zur Ausführung in der Maschinensteuerung und nach etwaigen Korrekturen, die sich aufgrund von Abweichungen der realen gegenüber der simulierten Automatisierungszelle ergeben haben, wieder zurück von der Maschinensteuerung in die Entwicklungsumgebung. Dort können sie abermals geprüft, simuliert und/oder optimiert und dann wieder zurück in die Maschinensteuerung übertragen werden. Dieses Vorgehen wird als "Program Roundloading" bezeichnet.

Durch das so geschaffene genaue und/oder aktuelle Abbild der Maschinensteuerung in der Entwicklungsumgebung wird die Produktivität der Entwicklungsumgebung erhöht, indem überflüssige Arbeit aufgrund von ungenauen Modell- und Simulationsdaten sowie zusätzliche Iterationen im Entwicklungsprozess zum Abgleich der Daten auf den beiden Seiten eingespart werden. So steigt auch die Wahrscheinlichkeit, dass die erstellten Maschinenprogramme fehlerfrei laufen, ohne nachbearbeitet werden zu müssen. Durch die zur Verfügung stehenden genauen Daten wird auch die Qualität der Simulationen gesteigert.

Die Abbildung der Maschinensteuerung in die Entwicklungsumgebung geschieht bevorzugt nicht nur während der Programmplanungs- und -erstellungsphase, sondern auch später während des laufenden Betriebs der Automatisierungszelle. Dadurch wird die Entwicklungsumgebung über Ereignisse in der Produktion weiterhin zeitnah informiert und so die Möglichkeit geschaffen, auf solche Ereignisse unmittelbar, in manueller oder auch automatischer Weise, zu reagieren. Beispiele für solche Ereignisse sind veränderte, unvorhergesehene Positionen eines Roboters oder anderer Maschinen, Benutzereingriffe oder bei der Produktion aufgetretene Fehler. Die Reaktion auf ein solches Ereignis auf Seiten der Entwicklungsumgebung kann dann z.B. in einer Simulation der unmittelbar bevorstehenden Aktionen der Maschinensteuerung bestehen. Diese Simulation sollte vorzugsweise schneller als in Echtzeit ablaufen, d.h. dass ein (Teil-)Ergebnis der Simulation bereits vorliegt, bevor die erste der unmittelbar bevorstehenden Aktionen der Maschinensteuerung begonnen hat. Dann kann das Ergebnis der Simulation dazu verwendet werden, einen Eingriff in die Maschinensteuerung auszulösen, bevor die unmittelbar bevorstehenden und potenziell problematischen Aktionen ausgeführt werden. Beispielsweise kann der Roboter noch rechtzeitig angehalten werden, bevor er mit einem anderen Roboter kollidiert.

Die bisher beschriebene Anordnung aus einer Entwicklungsumgebung und einer Maschinensteuerung kann auch auf eine Anordnung von mehreren Entwicklungsumgebungen und/oder mehreren Maschinensteuerungen erweitert werden. In diesem Fall wird in einer Entwicklungsumgebung wenigstens eine Maschinensteuerung abgebildet. Auf diese Weise lassen sich etwa die in der gesamten Automatisierungsanlage zur Verfügung stehenden Ressourcen in optimaler Weise bündeln, indem etwa in einer leistungsstärkeren Entwicklungsumgebung mehrere Robotersteuerungen abgebildet werden.

In einer bevorzugten Ausführungsform der Erfindung liegt wenigstens ein Teil der Daten, beispielsweise die Maschinen-Konfigurationsdaten, in einer Auszeichnungssprache vor, insbesondere im XML-Format. XML ("Extended Markup Language") ist eine Beschreibungssprache für hierarchische Datenstrukturen, welche einen De-facto-Industriestandard darstellt. Die Daten können dabei in Textform und damit maschinenunabhängig in Form einer Baumstruktur beschrieben werden, wobei die Knoten des Baumes durch sogenannte "Tags", welche je nach Anwendungsfall frei wählbar sind, bezeichnet werden können. Auf diese Weise ergibt sich eine universell einsetzbare, flexible Beschreibungssprache für Datenstrukturen, welche durch das Festlegen von Konventionen, insbesondere von Tag-Namen, auf den jeweiligen Anwendungsfall spezialisierbar ist. XML-Daten können in Form von Textdateien in der jeweiligen Umgebung, etwa einem Dateisystem, gespeichert werden. Dabei können die Daten durch geeignete Parser maschinell extrahiert und weiterverarbeitet bzw. die XML-Darstellungen durch geeignete Generatoren aus maschinenlesbaren Daten erzeugt werden.

Erfindungsgemäß enthalten eine oder mehrere Entwicklungsumgebungen und/oder eine oder mehrere Maschinensteuerungen jeweils eine Datenbank, in welcher jeweils wenigstens ein Teil der Daten der Entwicklungsumgebung bzw. der Maschinensteuerung gespeichert ist.

Datenbanken haben den Vorteil, dass in ihnen Daten verschiedenster Art effizient abgelegt, gespeichert und wiedergefunden werden können. Diese Funktionen werden durch ein zu der Datenbank gehörendes Datenbankmanagement-System ausgeführt. Operationen auf den Daten wie Anlegen, Ändern und Löschen können dann beispielsweise in Form von Transaktionen ausgeführt werden, wobei eine Transaktion eine Menge von zusammengehörenden Operationen auf verschiedenen Daten in der Datenbank darstellt. Bevorzugt entsprechen Transaktionen dem sogenannten "ACID-Prinzip" ("Atomicity, Consistency, Isolation, Durability"): Von einer atomaren Transaktion spricht man, wenn die Transaktion entweder ganz oder gar nicht ausgeführt wird. Konsistenz bedeutet, dass sich die Datenbank nach Beendigung der Transaktion (wieder) in einem konsistenten Zustand befindet. Mit Isolation ist gemeint, dass sich verschiedene in Ausführung befindliche Transaktionen nicht gegenseitig beeinflussen. Dauerhaftigkeit schließlich bedeutet, dass das Ergebnis einer erfolgreich abgeschlossenen Transaktion in der Datenbank persistent erhalten bleibt.

Für Datenbanken und zugehörige Datenbankmanagement-Systeme existiert eine Vielzahl von Standardprodukten, welche für den vorliegenden Verwendungszweck unmittelbar eingesetzt werden können. Vorzugsweise wird als Datenbank eine hierarchische Datenbank eingesetzt. Darin bilden zu speichernde Datenelemente eine Hierarchie oder Baumstruktur, in der jedes Datenelement (außer der Wurzel) von einem allgemeineren "Elternelement" abgeleitet wird. Hierarchische Datenbanken eignen sich daher besonders gut zur Abspeicherung von im XML-Format gegebenen Daten. Zu diesem Zweck sind auch spezielle "XML-Datenbanken" auf dem Markt vorhanden. Es können aber auch andere Datenbank-Typen, wie relationale oder objekt-orientierte Datenbanken, verwendet werden.

Durch die Verwendung einer hierarchischen Datenbank wird auf einfache Weise die Anforderung erfüllt, dass alle Datenelemente eindeutig identifizierbar sein müssen. In einer hierarchischen Datenbank kann als Identifikation eines Datenelements der Hierarchiepfad des Datenelements zusammen mit seinem Namen verwendet werden. Diese Bezeichnung ist dann eindeutig, vorausgesetzt, dass in einem Knotenpunkt der Hierarchie keine Datenelemente mit demselben Namen gespeichert sind.

Gleichzeitig bietet eine hierarchische Datenbank die Möglichkeit, darin sowohl abstrakte als auch spezifische Datenelemente zu speichern. Ein spezifisches Datenelement, das aus einem abstrakten Datenelement erzeugt wurde, lässt sich dann in der Hierarchie unterhalb des abstrakten Datenelement anordnen, um die Beziehung zwischen den beiden Datenelementen darzustellen. Weiterhin besteht in einer hierarchischen Datenbank die Möglichkeit, bestimmte Zweige der Hierarchie zu sperren, um sie so beispielsweise von einer Synchronisation mit anderen Datenbanken auszuschließen.

Erfindungsgemäß wird die Datenübertragung zwischen einer Entwicklungsumgebung und einer Maschinensteuerung dadurch realisiert, dass wenigstens ein Teil der Datenbank in einer Entwicklungsumgebung mit einem Teil der Datenbanken in einer oder mehreren Maschinensteuerungen synchronisiert wird. Hierunter versteht man den Abgleich der entsprechenden Teile der beteiligten Datenbanken miteinander mit dem Ziel, dass die Daten in diesen Teilen der Datenbanken einander soweit wie möglich entsprechen, insbesondere identisch sind.

Die Abbildung einer Maschinensteuerung in einer Entwicklungsumgebung geschieht in dieser Ausführung durch eine initiale Synchronisation der Datenbanken auf den beiden Seiten miteinander. Die initiale Synchronisation der Datenbanken kann dabei durch einfaches Kopieren der Daten von einer Seite auf die jeweils andere Seite geschehen.

Es ist möglich, nur solche Daten zu synchronisieren, die auch auf der jeweils anderen Seite von Interesse sind. Wird beispielsweise der Quellcode der in der Entwicklungsumgebung erstellten Maschinenprogramme in der oder den Maschinensteuerungen nicht benötigt, muss dieser Quellcode zwischen den Datenbanken auch nicht synchronisiert werden. Zu diesem Zweck kann jedes Element in einer Datenbank mit einer Eigenschaft versehen werden, welche explizit angibt, ob das betreffende Datenelement synchronisiert werden soll oder nicht. Falls es sich bei der Datenbank um eine hierarchische Datenbank handelt, so ist es nicht unbedingt nötig, diese Eigenschaft bei jedem Datenelement einzeln zu setzen. Vielmehr kann die Eigenschaft auch von dem jeweiligen Elternelement des Datenelements übernommen werden, wodurch sich das Datenaufkommen insgesamt reduziert.

Für die Synchronisation einer Anzahl von Datenbanken sind verschiedene Modi möglich: So können die beteiligten Datenbankmanagement-Systeme beispielsweise in periodischen Zeitabständen, etwa einmal in der Sekunde, überprüfen, ob sich in einer der beteiligten Datenbanken ein Datenelement geändert hat, und dieses Datenelement in den jeweils anderen Datenbanken auch entsprechend ändern. Das Nachziehen der Änderung eines Datenelements kann auch durch die Änderung des Datenelements selbst ausgelöst werden, so dass der Abgleich der Daten unmittelbar oder nur mit geringer zeitlicher Verzögerung erfolgt. Zusätzlich oder alternativ kann der Abgleich der Daten auch auf die explizite Anweisung eines Benutzers hin erfolgen.

Anhand der Art eines Datenelements kann für die Synchronisation festgelegt sein, auf welcher Seite sich der "originale" Zustande des Datenelements und auf welcher Seite sich lediglich eine Kopie des Datenelements befindet ("Master-Slave Replication"). So dürfen beispielsweise Änderungen in der Geometrie der Automatisierungszelle nur von der Datenbank in der Maschinensteuerung in die Datenbank in der Entwicklungsumgebung übernommen werden, aber nicht umgekehrt, da die Entwicklungsumgebung nicht die Realität in der Automatisierungszelle beeinflussen kann. Maschinenprogramme beispielsweise können dagegen in beiden Richtungen übertragen werden, da sie sowohl bei der Erstellung in der Entwicklungsumgebung als auch bei einer Korrektur in der Maschinensteuerung geändert werden können.

Gleichermaßen sind eine sogenannte synchrone Replikation, in der Konflikte, d. h. zueinander inkonsistente Zustände des gleichen Datenelements in verschiedenen Datenbanken, von vornherein vermieden werden ("conflict prevention") und eine sogenannte asynchrone Replikation möglich, in der Konflikte zeitweilig zugelassen werden und bei einer späteren Synchronisation der Datenbanken versucht wird, die Konflikte aufzulösen ("conflict resolution").

In einer Variante dieser bevorzugten Ausführung der Erfindung sind wenigstens einem in einer Datenbank gespeicherten Datenelement eine oder mehrere Instanzen eines oder mehrerer Computerprogramme zugeordnet, welche das Datenelement bearbeiten oder überwachen können. Wenn das gleiche Computerprogramm (im Sinne einer Abfolge von Schritten) zur Bearbeitung bzw. Überwachung verschiedener Datenelemente eingesetzt werden soll, kann es zweckmäßig sein, dieses Computerprogramm mehrfach zu instanziieren. Jede so erzeugte Instanz des Computerprogramms wird dann einem bestimmten Datenelement zugeordnet, das bearbeitet bzw. überwacht werden soll. Solche Computerprogramme bzw. deren Instanzen, welche einzeln oder im Verbund miteinander derartige Aufgaben ausführen, werden auch als "Software-Agenten" bezeichnet.

Derartige Computerprogramminstanzen können wahlweise in einer Entwicklungsumgebung und/oder in einer Maschinensteuerung ablaufen. Dadurch ist sichergestellt, dass ein Anwender die den Computerprogramminstanzen zugeordneten Datenelemente in den Datenbanken auch dann bearbeiten kann, wenn eine Entwicklungsumgebung und eine darin abgebildete Maschinensteuerung zeitweilig nicht verbunden sind.

Die Bearbeitung eines Datenelements kann beispielsweise darin bestehen, einen Wert für das Datenelement über eine Schnittstelle einzulesen, das Datenelement mit dem eingelesenen Wert neu anzulegen, das Datenelement zu ändern, d.h. ihm einen anderen Wert zuzuweisen, das Datenelement von einem Datentyp in einen anderen umzuwandeln, ein spezifisches in ein abstraktes Datenelement zu verallgemeinern oder in umgekehrter Weise zu spezialisieren, den Wert eines Datenelementes auszulesen oder das Datenelement zu löschen. Die Überwachung eines Datenelements durch eine Computerprogramminstanz kann beispielsweise darin bestehen, aufgrund einer Veränderung des Datenelements eine bestimmte Aktion auszuführen, z.B. eine Meldung auszulösen, wenn der Wert des Datenelements einen vorgegebenen Bereich verlässt. Die Computerprogramminstanzen, die einem in einer Datenbank gespeicherten Datenelement zugeordnet sind, laufen in dem der Datenbank zugeordneten Datenbankmanagement-System ab, vorzugsweise parallel in Form von gleichzeitig ausgeführten Prozessen oder in Form von mehreren gleichzeitig ausgeführten Threads innerhalb eines Prozesses.

In einer Ausführung der Erfindung ist eine Entwicklungsumgebung dazu eingerichtet, auf Veränderungen in einer Maschinensteuerung, die in ihr abgebildet ist, zu reagieren. Auch die Möglichkeit einer solchen Reaktion kann zum Zwecke einer Überwachung eingesetzt werden. In diesem Fall werden jedoch nicht, wie oben, einzelne Datenelemente in einer Datenbank überwacht, sondern es wird eine Maschinensteuerung von einer Entwicklungsumgebung, in der die Maschinensteuerung abgebildet ist, überwacht. Eine solche Überwachung kann auch bei laufendem Betrieb, d.h. während des Ablaufs des realen Maschinenprogramms, durchgeführt werden und hat das Ziel, Probleme im Betrieb frühzeitig zu erkennen und zu vermeiden.

Solche Probleme können beispielsweise darin bestehen, dass ein Roboter mit einem anderen Roboter oder einer anderen Maschine wie einer Transporteinrichtung kollidiert, dass ein Werkstück bei der Handhabung durch einen Roboter fallen gelassen wird oder auf andere Weise verloren geht oder dass beim Be- oder Entladen einer Maschine eine instabile Last entsteht, d.h. dass die Maschine in einer Weise mechanisch belastet wird, die ihre statische und/oder dynamische Leistungsfähigkeit übersteigt, was eine Fehlfunktion oder sogar eine Beschädigung der Maschine und/oder des Werkstücks zur Folge haben kann.

Die Reaktion der Entwicklungsumgebung auf eine Änderung in der Maschinensteuerung kann wiederum eine Änderung in der Maschinensteuerung bewirken, indem sie beispielsweise das Anhalten der Maschine und/oder die Wiederholung eines Schrittes des Maschinenprogramms, etwa im Falle eines verloren gegangenen Werkstücks, bewirkt. Die Reaktion kann aber auch unabhängig von der Maschinensteuerung sein, beispielsweise indem sie in einer Benachrichtigung des Benutzers über ein Pop-up-Fenster auf einem Bildschirm besteht.

Es ist auch möglich, die für eine solche Überwachung notwendige Software auf der Maschinensteuerung selbst zu installieren. Die erfindungsgemäß vorgeschlagene Anordnung der Überwachungssoftware in einer Entwicklungsumgebung hat jedoch mehrere Vorteile:
Zum einen kann die Hardware, auf der die Überwachungssoftware installiert ist, stets auf dem neuesten Stand gehalten werden, ohne in die verhältnismäßig teure Hardware der Maschinensteuerung eingreifen oder diese gar austauschen zu müssen. Auf Seiten der Entwicklungsumgebung können dagegen im Allgemeinen gewöhnliche Industrie-PCs als Hardware eingesetzt werden, welche mit weit geringeren Kosten als die hoch spezialisierte Hardware der Maschinensteuerung ausgetauscht werden können. Somit kann das Überwachungssystem auf einfache und kostengünstige Weise an der Weiterentwicklung, beispielsweise im Hinblick auf Rechen- oder Speicherleistung, teilhaben, wodurch die Leistungsfähigkeit des Überwachungssystems entsprechend gesteigert werden kann.

Die Verlagerung der Überwachungssoftware von einer Maschinensteuerung auf eine Entwicklungsumgebung hat weiterhin den Vorteil, dass die Überwachungssoftware wahlweise auf verschiedene Maschinen in der gesamten Automatisierungsanlage "aufgeschaltet" werden kann, d. h. jede in der Entwicklungsumgebung abgebildete Maschinensteuerung kann auf diese Weise überwacht werden, um kritische Stellen im Betrieb oder bereits während der Inbetriebnahme zu überwachen. Dies wird durch das erfindungsgemäße Merkmal ermöglicht, dass in derselben Entwicklungsumgebung auch mehrere Maschinensteuerungen abgebildet sein können.

Weiterhin können die in der Entwicklungsumgebung ohnehin vorhandenen Software-Komponenten wie etwa Visualisierungseinrichtungen für Automatisierungsabläufe oder -zustände auch für die Überwachungssoftware genutzt werden, woraus sich in der Systemarchitektur und in der Softwareentwicklung Synergien ergeben.

Zusätzlich kann die Überwachung während der Produktion dazu genutzt werden, den Produktionsprozess zu verbessern. Wird beispielsweise durch die Überwachungssoftware festgestellt, dass eine Maschinensteuerung auf Grund einer Veränderung in der Automatisierungszelle eine lokale Änderung an der Bewegungsbahn eines Roboters vorgenommen hat, so kann dies in der Entwicklungsumgebung zum Anlass genommen werden, die gesamte Bewegungsbahn des Roboters unter Berücksichtigung dieser lokalen Änderung in der Automatisierungszelle neu zu planen und zu optimieren. Auf diese Weise kann die Zykluszeit verringert werden.

Bei der Erkennung eines Problems in der realen Produktion wie in den oben genanten Beispielen ist es auch möglich, die Maschine über die Maschinensteuerung anzuhalten oder zumindest das ablaufende Maschinenprogramm zu unterbrechen und an dieser Stelle eine von der Entwicklungsumgebung bereitgestellte Fehlerbehandlungsstrategie auszuführen. Werden beispielsweise in der laufenden Produktion Fertigungstoleranzen festgestellt, die bestimmte vorgegebene Werte überschreiten, so kann eine Fehlerbehandlungsstrategie darin bestehen, die Maschine zunächst in eine zuvor bestimmte Parkposition zu fahren und anschließend eine Kalibration der Maschine mit dem Ziel durchzuführen, die Betriebsparameter der Maschine neu einzustellen und damit ggf. an neue Umgebungsbedingungen anzupassen und somit die erlaubten Fertigungstoleranzen in der Produktion wieder einzuhalten.

Weiterhin ist es möglich, dass die Reaktion einer Entwicklungsumgebung auf eine Veränderung in einer Maschinensteuerung, wiederum beispielsweise das Überschreiten eines zulässigen Genauigkeitswertes in der Produktion, die Ermittlung einer Vorhersage einer oder mehrerer bevorstehender Aktionen der Maschinensteuerung umfasst.

Eine solche Vorhersage kann insbesondere durch den Ablauf einer Simulation in der Entwicklungsumgebung ermittelt werden. Dabei wird, ausgehend von dem zu einem bestimmten Zeitpunkt vorhandenen Abbild der Maschinensteuerung in der Entwicklungsumgebung, in der Entwicklungsumgebung ein Simulationsprogramm gestartet, das unter Berücksichtigung des aktuell ausgeführten Maschinenprogramms die nächsten Schritte der Maschinensteuerung vorhersagen kann.

Die Ermittlung der Vorhersage, also insbesondere der Ablauf der Simulation, ist dabei vorzugsweise bereits abgeschlossen, bevor die erste der bevorstehenden Aktionen der Maschinensteuerung begonnen hat. Dadurch wird vermieden, dass potenziell unerwünschte Aktionen in der Maschinensteuerung bereits ausgeführt werden, bevor die Entwicklungsumgebung die Möglichkeit hat, auf die Maschinensteuerung Einfluss zu nehmen, z. B. durch das Auslösen eines Maschinenstopps.

Das erfindungsgemäße Verfahren zur Erstellung von Maschinenprogrammen in einer oder mehreren Entwicklungsumgebungen und zur Steuerung einer oder mehrerer Maschinen durch eine oder mehrere Maschinensteuerungen läuft in einem System aus Entwicklungsumgebungen und Maschinensteuerungen mit einem oder mehreren der bisher genannten Merkmale ab. Gemäß dem Verfahren werden in einer Entwicklungsumgebung eine oder mehrere Maschinensteuerungen abgebildet. Sodann werden regelmäßig Daten von einer Entwicklungsumgebung zu einer Maschinensteuerung und/oder umgekehrt übertragen, insbesondere durch die Synchronisation von Datenbanken auf den beiden Seiten.

Die Erfindung umfasst ferner ein Computerprogrammprodukt mit Programmcode, der auf einem oder mehreren maschinenlesbaren Datenträgern wie Disketten, USB-Sticks oder dergleichen gespeichert ist und der das oben beschriebene Verfahren ausführt, wenn er in dem oben beschriebenen System abläuft. Da es sich bei dem System um ein aus mehreren Entwicklungsumgebungen und Maschinensteuerungen bestehendes verteiltes System mit mehreren Komponenten handelt, hat auch der Programmcode vorzugsweise die Form eines verteilten Softwaresystems und macht bevorzugt von den Methoden der verteilten Programmierung wie der Nebenläufigkeit von Prozessen und Threads oder der asynchronen Kommunikation zwischen verschiedenen Komponenten Gebrauch.

Ein System und ein Verfahren mit den beschriebenen Merkmalen bieten dem Anwender eine Fülle von Möglichkeiten bei der Erstellung von Maschinenprogrammen, die im Stand der Technik noch nicht vorhanden sind und welche den Komfort und die Flexibilität seines Arbeitsprozesses beträchtlich erweitern.

Weitere Vorteile und Merkmale der Erfindung ergeben sich aus den Unteransprüchen und den Ausführungsbeispielen. Hierzu zeigt, teilweise schematisiert:
- Fig. 1:: die Architektur von für die Datenhaltung und -verarbeitung zuständigen Komponenten eines Systems nach einer Ausführung der vorliegenden Erfindung;
- Fig. 2:: ein Blockschaubild einer Schnittstelle zu einer Datenbank in einer Entwicklungsumgebung oder Maschinensteuerung des Systems nach Fig. 1; und
- Fig. 3:: ein Zustandsdiagramm für den Ablauf der Synchronisation zweier oder mehrerer Datenbanken.

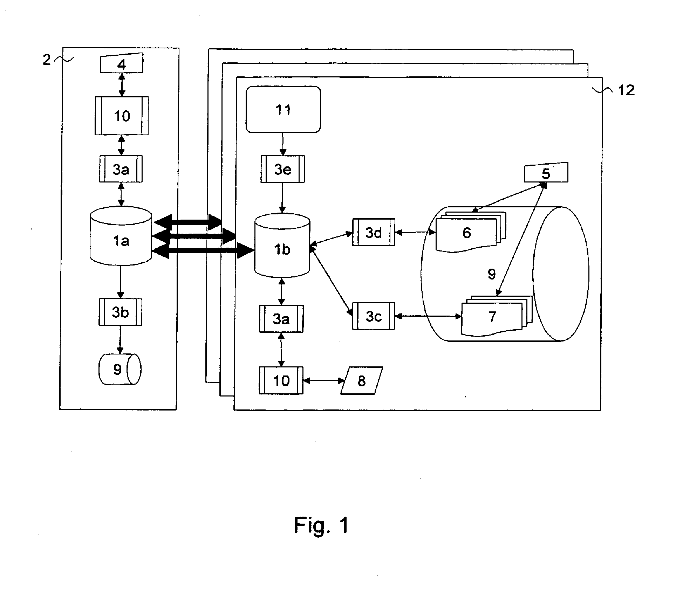

Das in Figur 1 gezeigte System bezieht sich auf eine Anlage, in der drei Roboter mit ihren jeweiligen Automatisierungszellen und ihren zugehörigen Maschinensteuerungen 12 in einer einzigen Entwicklungsumgebung 2 abgebildet werden. Die Figur zeigt exemplarisch die Entwicklungsumgebung 2 sowie eine Maschinensteuerung 12, wobei zwei weitere Maschinensteuerungen durch die dahinter liegenden Rahmen angedeutet sind. Eine Datenbank 1a der Entwicklungsumgebung wird mit einer Datenbank 1 b der Maschinensteuerung synchronisiert, was durch den untersten der drei schwarzen Doppelpfeile zwischen den Datenbanken 1 a und 1 b dargestellt ist. Auch die Datenbanken der beiden anderen Maschinensteuerungen sind mit der Datenbank 1a der Entwicklungsumgebung synchronisiert (oberer und mittlerer schwarzer Doppelpfeil). Während in der Datenbank 1a der Entwicklungsumgebung 2 alle in dem System vorhandenen Daten gespeichert sind, sind in der Datenbank 1 b der Maschinensteuerung 12 nur die für die zugehörige Maschine relevanten Daten gespeichert.

In Figur 1 sind weiterhin verschiedene Computerprogramminstanzen 3a-3e zu sehen, welche einzelne Datenelemente in den Datenbanken 1 a bzw. 1 b bearbeiten. Gemäß ihrem Einsatzzweck können die zugehörigen Computerprogramme auch als Transformationsprogramme für die Datenelemente bezeichnet werden.

Die Computerprogramminstanz 3a liest Daten aus der Datenbank 1 a aus und schreibt Daten in diese hinein. Sie dient damit als unmittelbare Datenschnittstelle zur Datenbank 1 a. Die ein- bzw. ausgelesenen Daten stammen aus einem Editor 10 bzw. werden in diesem dargestellt. Der Editor 10 wiederum bildet die Schnittstelle zu einem menschlichen Anwender, welcher seine Eingaben 4 über den Editor 10 tätigt bzw. die Ausgaben des Systems über den Editor 10 empfängt, indem er Dateien in dem Editor 10 bearbeitet bzw. angezeigt bekommt.

Die Computerprogramminstanz 3b schreibt Daten aus der Datenbank 1 a in das Dateisystem 9 eines (nicht abgebildeten) Entwicklungs- und Simulationsrechners in der Entwicklungsumgebung 2 hinein. Diese Daten können etwa Simulationsprogramme oder in der Entwicklungsumgebung 2 erzeugte Werkzeug- oder Maschinenbahnen sein.

Die Computerprogramminstanz 3b kann eine Instanz des gleichen Computerprogramms sein, von dem in der Maschinensteuerung 12 die Computerprogramminstanzen 3c und 3d gebildet werden. Hierbei dient die Programminstanz 3c zum Schreiben und Lesen von Maschinenkonfigurationsdateien 7 in ein bzw. aus einem Dateisystem 9 der Maschinensteuerung 12. Die Computerprogramminstanzen 3d dient entsprechend zum Schreiben und Lesen von Maschinenprogrammen 6 in das bzw. aus dem Dateisystem 9. Die Programminstanz 3d hat dabei zugleich die Funktion eines Codegenerators, der aus den Daten in der Datenbank 1 b die Maschinenprogramme 6 generiert.

Sowohl die Maschinenprogramme 6 als auch die Konfigurationsdateien 7 werden dabei vorzugsweise im XML-Format dargestellt und im Dateisystem 9 gespeichert. Weiterhin können sowohl die Maschinenprogramme 6 als auch die Konfigurationsdateien 7 manuell durch einen Anwender geändert werden, in dem dieser die gewünschten Änderungen 5 z. B. in einem XML-Editor an den entsprechenden XML-Dateien vornimmt.

Die Computerprogramminstanz 3e dient zur Umwandlung von Maschinenvariablen 11, welche beispielsweise in Form von Messwerten der Achsstellungen des Roboters während der Ausführung des Maschinenprogramms ermittelt werden. Die Computerprogramminstanz 3e wandelt diese Maschinenvariablen 11 in ein für die Datenbank 1 b geeignetes Format um und gibt sie dann an die Datenbank 1 b weiter.

Genau wie auf Seiten der Entwicklungsumgebung 2 können über eine Computerprogramminstanz 3a Daten aus der Datenbank 1b in einen Editor 10 ausgelesen bzw. aus dem Editor 10 über die Computerprogramminstanz 3a in die Datenbank 1b eingelesen werden. Der Editor 10 wird wiederum von einem Anwender benutzt, welcher auf diesem Wege seine Eingaben 8 in das System macht bzw. die Ausgaben des Systems entgegennimmt.

Um die Bearbeitung der Datenelemente in den Datenbanken 1 a und 1 b korrekt vornehmen zu können, muss jedem solchen Datenelement eine Instanz des richtigen Computerprogramms zugeordnet werden. Diese Zuordnung kann bei der Entwicklung des Systems in Form von allgemeinen Regeln hinterlegt werden, die einem bestimmten abstrakten Datentyp ein bestimmtes Computerprogramm zuordnet. Wird nun - vor oder während der Laufzeit eines Maschinenprogramms 6 - aus dem abstrakten Datentyp ein spezifisches Datenelement instanziiert, so wird aufgrund der allgemeinen Regel diesem Datenelement eine Instanz des zugehörigen Computerprogramms zugeordnet, die die Bearbeitung des Datenelements während dessen Lebensdauer übernimmt. Endet die Lebensdauer des Datenelements, so endet gleichzeitig auch die Lebensdauer der ihm zugeordneten Computerprogramminstanz.

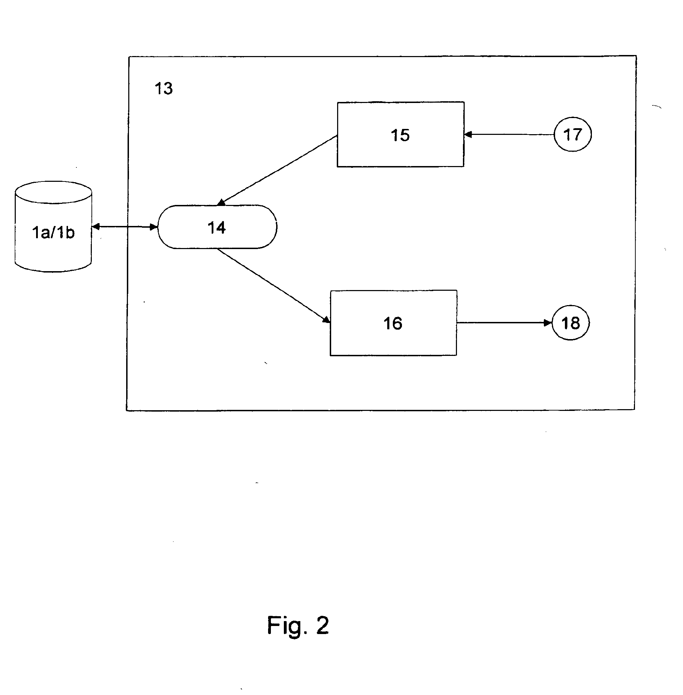

In Figur 2 ist das Datenbankschnittstellensystem 13 einer Datenbank 1 a bzw. 1 b detailliert dargestellt. Die unmittelbare Verbindung zur Datenbank 1 a bzw. 1 b stellt die Datenbankschnittstelle 14 dar. Sie wird gespeist durch eine Computerprogramminstanz 15 für die Umwandlung von eingegebenen Daten, welche wiederum über die Eingabeschnittstelle 17 eingegeben werden. Umgekehrt werden die Daten aus der Datenbank 1a bzw. 1b über die Datenbankschnittstelle 14 auf eine Ausgabeschnittstelle 18 ausgegeben, wobei sie vorher ggf. noch durch eine Computerprogramminstanz 16 umgewandelt werden.

Falls die über die Eingabeschnittstelle 17 eingegebenen Daten die Form einer XML-Datei haben, kann es sich bei der Computerprogramminstanz 14 beispielsweise um einen XML-Parser handeln, welcher die XML-Datei analysiert ("parst") und dabei entsprechende Daten für die Datenbankschnittstelle 14 generiert. Umgekehrt kann es sich bei der Programminstanz 16 beispielsweise um einen Programmcode-Generator handeln, der aus den in der Datenbank 1 a bzw. 1 b gespeicherten Daten ein ausführbares Maschinenprogramm generiert und über die Ausgabeschnittstelle 18 ausgibt.

Z. B. im Fall von Programmcode-Erzeugung ist die Computerprogramminstanz 15 überflüssig, da in diesem Fall keine Daten eingelesen werden sollen. Umgekehrt ist z. B. im Fall der Überwachung von Maschinenpositionen (etwa mit Hilfe der Maschinenvariablen 11 in Figur 1) die Computerprogramminstanz 16 überflüssig, da in diesem Fall keine Daten generiert werden sollen. Der genannte Einsatz eines Parsers sowie einer Programmcode-Generierung hat den Vorteil, dass der Anwender die Maschinendaten auch ohne Benutzung der Datenbank 1a bzw. 1b oder eines Editors 10 ändern kann.

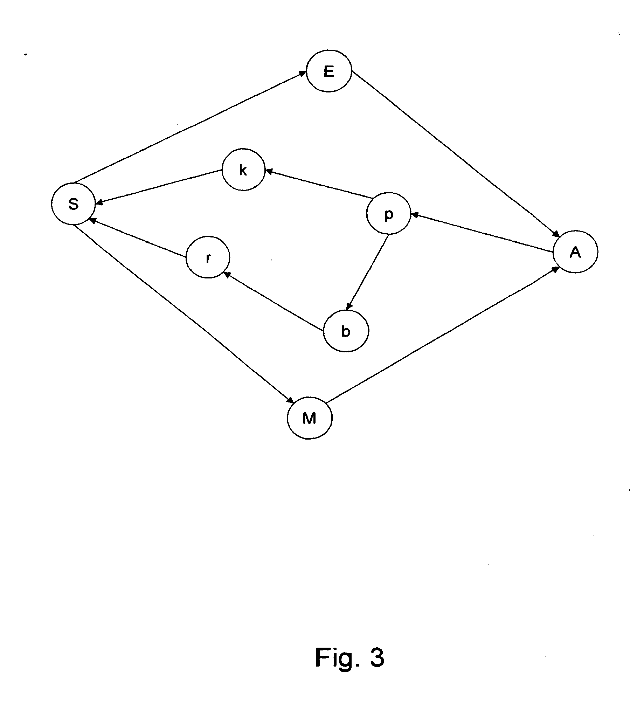

In Figur 3 wird exemplarisch angekommen, dass die beteiligten Datenbanken synchron und verbunden sind (Zustand "Synchron" bzw. "S"). Erfolgt nun durch die Entwicklungsumgebung oder durch die Maschinensteuerung eine Änderung in einer der Datenbanken (Zustand "Geändert von der Entwicklungsumgebung" bzw. "E" oder "Geändert von der Maschinensteuerung" bzw. "M"), so bedindet sich das System im Zustand "Asynchron" bzw. "A". Die Änderung wird dann in allen anderen Datenbanken publiziert, d. h. es wird eine Nachricht mit dem Inhalt der Änderung an alle anderen beteiligten Datenbanken gesendet (Zustand "Änderung publiziert" bzw. "p"). Da die beteiligten Datenbanken stets einen miteinander konsistenten Zustand haben sollen, darf eine publizierte Änderung nur dann von einer anderen Datenbank übernommen werden, wenn alle beteiligten Datenbanken diese Änderung akzeptieren. Falls eine beteiligte Datenbank eine publizierte Änderung ablehnt, beispielsweise weil sie für die Neuanlage eines Datenelements nicht mehr über genügend Speicher verfügt oder weil bei ihr ein interner Fehler aufgetreten ist (Zustand "Änderung abgelehnt" bzw. "b"), so wird die publizierte Änderung in allen anderen Datenbanken, welche diese Änderung bereits ausgeführt haben, rückgängig gemacht (Zustand "Änderung rückgängig gemacht" bzw. "r"). Auch diejenige Datenbank, die die Änderung publiziert hatte, muss diese bei sich rückgängig machen. Auf diese Weise befindet sich das System wieder im Zustand "Synchron". Die publizierte Änderung ist dann jedoch in keiner Datenbank durchgeführt worden. Haben dagegen alle beteiligten Datenbanken die publizierte Änderung akzeptiert (Zustand "Änderung akzeptiert" bzw. "k"), so befindet sich das System ebenfalls wieder im Zustand "Synchron", und die publizierte Änderung ist in allen Datenbanken durchgeführt worden.

Während eine Synchronisation zwischen mehreren Datenbanken läuft, sind keine Änderungen an den zu synchronisierenden Datenelementen möglich. Dies kann bei Verwendung einer hierarchischen Datenbank in einfacher Weise dadurch realisiert werden, dass bestimmte Zweige des Hierarchiebaums in der Datenbank für Änderungen gesperrt werden.

Der in Figur 3 dargestellte Ablauf für die Synchronisation zweier oder mehrerer Datenbanken setzt voraus, dass die beteiligten Datenbanken bereits initial miteinander synchronisiert wurden. Eine initiale Synchronisation wird durchgeführt, wenn zwei Datenbanken, die noch nicht verbunden waren oder die schon einmal verbunden waren, aber zwischenzeitlich wieder getrennt wurden, verbunden werden.

Die initiale Synchronisation zweier Datenbanken unterscheidet sich von dem in Figur 3 dargestellten Ablauf dadurch, dass sie nicht von einer Änderung an einem Datenelement ausgelöst wird. Vielmehr muss bei verschiedenen Werten desselben Datenelements in verschiedenen Datenbanken zunächst entschieden werden, welchen Wert das Datenelement nach der Synchronisation in allen Datenbanken haben soll. Dieser Wert kann etwa von der aktuellsten Änderung auf dem Datenelement bestimmt werden, was voraussetzt, dass in jedem Datenelement das Datum der letzten Änderung in Form eines Zeitstempels gespeichert ist. Alternativ dazu kann auch der Anwender entscheiden, welchen Wert das Datenelement nach der Synchronisation in allen Datenbanken haben soll. Der weitere Ablauf der initialen Synchronisition entspricht dann dem in Figur 3 dargestellten Ablauf.

Der Ablauf in Figur 3 entspricht dem Prinzip einer "verteilten Transaktion". Auch bei einer verteilten Transaktion sind die oben erwähnten ACID-Grundsätze verwirklicht: Die verteilte Transaktion ist atomar, d.h. sie wird in allen beteiligten Datenbanken oder in gar keiner ausgeführt. Die beteiligten Datenbanken haben nach Ausführung der verteilten Transaktion wieder einen konsistenten - hier als "synchron" bezeichneten - Zustand, sofern der Zustand auch vor der Transaktion konsistent war. Die verteilte Transaktion ist isoliert, da die beteiligten Datenbanken während des Ablaufs der verteilten Transaktion für weitere Änderungen an den zu synchronisierenden Datenelementen gesperrt sind. Schließlich werden die von der verteilten Transaktion durchgeführten Änderungen in den beteiligten Datenbanken wieder dauerhaft gespeichert.

### Bezugszeichenliste

- 1a/1b: Datenbank
- 2: Entwicklungsumgebung
- 3a-3e: Computerprogramminstanzen
- 4: Anwendereingaben in der Entwicklungsumgebung
- 5: Anwenderänderungen in der Maschinensteuerung an XML-Dateien
- 6: Maschinenprogramme im XML-Format
- 7: Maschinen-Konfigurationsdaten im XML-Format
- 8: Anwendereingaben in der Maschinensteuerung
- 9: Dateisystem
- 10: Editor
- 11: Maschinenvariablen
- 12: Maschinensteuerung
- 13: Datenbankschnittstellensystem
- 14: Datenbankschnittstelle
- 15: Computerprogramminstanz für die Umwandlung von Eingabedaten
- 16: Computerprogramminstanz für die Umwandlung von Ausgabedaten
- 17: Eingabeschnittstelle
- 18: Ausgabeschnittstelle

- S: Zustand "Synchron"
- E: Zustand "Geändert von der Entwicklungsumgebung"
- M: Zustand "Geändert von der Maschinensteuerung"
- A: Zustand "Asynchron"
- p: Zustand "Änderung publiziert"
- b: Zustand "Änderung abgelehnt"
- r: Zustand "Änderung rückgängig gemacht"
- k: Zustand "Änderung akzeptiert"

## Patentansprüche

1. System aufweisend wenigstens eine Entwicklungsumgebung (2) für die Erstellung von Maschinenprogrammen (6), insbesondere Roboterprogrammen, und wenigstens eine Maschinensteuerung (12), insbesondere für die Steuerung wenigstens eines Roboters, wobei in der wenigstens einen Entwicklungsumgebung (2) die wenigstens eine Maschinensteuerung (12) abgebildet ist und das System zur regelmäßigen Übertragung von Daten von der wenigstens einen Entwicklungsumgebung (2) zu der wenigstens einen Maschinensteuerung (12) und/oder umgekehrt eingerichtet ist, **dadurch gekennzeichnet, dass** die wenigstens eine Entwicklungsumgebung (2) und die wenigstens eine Maschinensteuerung (12) jeweils eine Datenbank (1a, 1b) enthält, in welcher jeweils wenigstens ein Teil der Daten der Entwicklungsumgebung (2) bzw. der Maschinensteuerung (12) gespeichert ist, wobei wenigstens ein Teil der Datenübertragung in Form einer Synchronisation von den wenigstens zwei Datenbanken (1 a, 1 b) erfolgt.

2. System nach Anspruch 1, **dadurch gekennzeichnet, dass** eine Datenübertragung so gestaltet ist, dass das Abbild einer Maschinensteuerung (12) in einer Entwicklungsumgebung (2) genau und/oder aktuell ist.

3. System nach einem der vorhergehenden Ansprüche, **dadurch gekennzeichnet, dass** eine Datenübertragung diskret in im Wesentlichen periodischen Zeitabständen, ereignisgesteuert und/oder wenigstens annähernd kontinuierlich erfolgt.

4. System nach einem der vorhergehenden Ansprüche, **dadurch gekennzeichnet, dass** übertragene Daten Maschinenprogramme (6) und/oder Maschinenkonfigurationsdaten (7) umfassen.

5. System nach einem der vorhergehenden Ansprüche, **dadurch gekennzeichnet, dass** wenigstens ein Teil der Daten in einer Auszeichnungssprache, insbesondere im XML-Format, gegeben ist.

6. System nach Anspruch 1, **dadurch gekennzeichnet, dass** wenigstens eine Datenbank (1a, 1b) eine hierarchische Datenbank ist.

7. System nach einem der Ansprüche 1 bis6, **dadurch gekennzeichnet, dass** wenigstens einem in einer Datenbank (1 a, 1 b) gespeicherten Datenelement eine Computerprogramminstanz (3a-3e) zugeordnet ist, welche das Datenelement bearbeiten, insbesondere einlesen, neu anlegen, ändern, umwandeln, verallgemeinern, spezialisieren, auslesen und/oder löschen, kann; und/oder welche das Datenelement überwachen, insbesondere auf Grund einer Veränderung des Datenelements eine Aktion auslösen oder ausführen, kann.

8. System nach einem der vorhergehenden Ansprüche, **dadurch gekennzeichnet, dass** die wenigstens eine Entwicklungsumgebung (2) eingerichtet ist, auf Veränderungen in einer Maschinensteuerung (12), die in ihr abgebildet ist, zu reagieren.

9. System nach Anspruch 8, **dadurch gekennzeichnet, dass** eine Reaktion der Entwicklungsumgebung die Ermittlung einer Vorhersage, insbesondere durch den Ablauf einer Simulation, wenigstens einer bevorstehenden Aktion der Maschinensteuerung (12) umfasst.

10. System nach Anspruch9, **dadurch gekennzeichnet, dass** die Ermittlung der Vorhersage abgeschlossen ist, bevor eine bevorstehende Aktion oder die erste von bevorstehenden Aktionen der Maschinensteuerung (12) begonnen hat.

11. System nach Anspruch 8 bis 10, **dadurch gekennzeichnet, dass** eine Reaktion der Entwicklungsumgebung eine Auswirkung der Vorhersage auf die Maschinensteuerung (12), insbesondere das Anhalten der Maschine, umfasst.

12. Verfahren zur Erstellung von Maschinenprogrammen (6), insbesondere Roboterprogrammen, in der wenigstens einen Entwicklungsumgebung (2) und zur Steuerung wenigstens einer Maschine, insbesondere eines Roboters, durch die wenigstens eine Maschinensteuerung (12) mittels eines Systems nach einem der vorhergehenden Ansprüche, wobei die wenigstens eine Maschinensteuerung (12) in der wenigstens einen Entwicklungsumgebung (2) abgebildet wird und regelmäßig Daten von der wenigstens einen Entwicklungsumgebung (2) zu der wenigstens einen Maschinensteuerung (12) und/oder umgekehrt übertragen werden.

13. Computerprogrammprodukt mit Programmcode, der auf wenigstens einem maschinenlesbaren Träger gespeichert ist und ein Verfahren nach Anspruch 12 ausführt, wenn er in einem System nach einem der Ansprüche 1 bis 11 abläuft.

## Claims

1. A system comprising at least one development environment (2) for creating machine programs (6), in particular robot programs, and at least one machine control (12), in particular for controlling at least one robot, wherein in the at least one development environment (2) the at least one machine control (12) is represented and the system is adapted for regular transfer of data from the at least one development environment (2) to the at least one machine control (12) and/or vice versa, **characterized in that** the at least one development environment (2) and the at least one machine control (12) each comprise a database (1 a, 1 b) in which at least a part of the data of the development environment (2) or the machine control (12) respectively is stored, wherein at least a part of the data transfer takes place in form of a synchronization of the at least two databases (1 a, 1 b).

2. A system according to claim 1, **characterized in that** a data transfer is configured such that the representation of a machine control (12) in a development environment (2) is accurate and/or up to date.

3. A system according to one of the preceding claims, **characterized in that** a data transfer takes place discretely at essentially periodic intervals, event-driven and/or at least approximately continuously.

4. A system according to one of the preceding claims, **characterized in that** transferred data comprise machine programs (6) and/or machine configuration data (7).

5. A system according to one of the preceding claims, **characterized in that** at least a part of the data is provided in a markup language, in particular XML format.

6. A system according to claim 1, **characterized in that** at least one database (1 a, 1 b) is a hierarchical database.

7. A system according to one of the claims 1 to 6, **characterized in that** to at least one data element stored in a database (1 a, 1 b) a computer program instance (3a-3e) is assigned, which can edit the data element, in particular import, create, amend, convert, generalize, specialize, read out and/or delete the data element; and/or which can monitor the data element, in particular trigger or carry out an action based on a change of the data element.

8. A system according to one of the preceding claims, **characterized in that** the at least one development environment (2) is adapted to react to changes in a machine control (12) that is represented therein.

9. A system according to claim 8, **characterized in that** a reaction of the development environment comprises determining a prediction, in particular by running a simulation, of at least one forthcoming action of the machine control (12).

10. A system according to claim 9, **characterized in that** the determining of the prediction is finished before a forthcoming action or the first one of forthcoming actions of the machine control (12) has started.

11. A system according to claims 8 to 10, **characterized in that** a reaction of the development environment comprises an effect of the prediction on the machine control (12), in particular the stopping of the machine.

12. A method for creating machine programs (6), in particular robot programs, in the at least one development environment (2) and for controlling at least one machine, in particular a robot, by the at least one machine control (12) by means of a system according to one of the preceding claims, wherein the at least one machine control (12) is represented in the at least one development environment (2) and wherein data are regularly transferred from the at least one development environment (2) to the at least one machine control (12) and/or vice versa.

13. A computer program product with program code which is stored on at least one machine readable carrier and carries out a method according to claim 12, when it runs in a system according to one of the claims 1 to 11.

## Revendications

1. Système présentant au moins un environnement de développement (2) pour la rédaction de programmes de machine (6), en particulier de programmes pour robots, et au moins une commande de machine (12), en particulier pour la commande d'au moins un robot, la ou les commandes de machine (12) étant reproduites dans l'environnement ou les environnements de développement (2) et le système étant configuré pour transmettre régulièrement des données de l'environnement ou des environnements de développement (2) à la ou aux commandes de machine (12) et/ou inversement, **caractérisé en ce que** l'environnement ou les environnements de développement (2) et la ou les commandes de machine (12) contiennent respectivement une banque de données (1a, 1b), dans laquelle respectivement au moins une partie des données de l'environnement de développement (2) ou de la commande de machine (12) est mise en mémoire, au moins une partie de la transmission des données étant réalisée sous la forme d'une synchronisation des deux banques de données (1a, 1b) ou plus.

2. Système selon la revendication 1, **caractérisé en ce qu'**une transmission de données est conçue de sorte que la reproduction d'une commande de machine (12) dans un environnement de développement (2) est précise et/ou actuelle.

3. Système selon l'une quelconque des revendications précédentes, **caractérisé en ce qu'**une transmission de données est réalisée discrètement par intervalles sensiblement périodiques, en étant commandée par des événements et/ou au moins presque en continu.

4. Système selon l'une quelconque des revendications précédentes, **caractérisé en ce que** les données transmises comprennent des programmes de machine (6) et/ou des données de configuration de machine (7).

5. Système selon l'une quelconque des revendications précédentes, **caractérisé en ce qu'**au moins une partie des données est fournie dans une langue de balisage, en particulier au format XML.

6. Système selon la revendication 1, **caractérisé en ce qu'**au moins une banque de données (1a, 1b) est une base de données hiérarchiques.

7. Système selon l'une quelconque des revendications 1 à 6, **caractérisé en ce qu'**une instance de programme informatique (3a-3e), laquelle peut traiter, en particulier lire, recréer, modifier, convertir, généraliser, spécialiser, consulter et/ou effacer l'élément de données, et/ou laquelle peut contrôler l'élément de données, en particulier déclencher ou exécuter une action sur la base d'une modification de l'élément de données, est associée à au moins un élément de donnée mis en mémoire dans une banque de données (1a, 1b).

8. Système de données selon l'une quelconque des revendications précédentes, **caractérisé en ce que** l'environnement ou les environnements de développement (2) sont conçus pour réagir à des variations dans une commande de machine (12) qui est reproduite dans ces derniers.

9. Système selon la revendication 8, **caractérisé en ce qu'**une réaction de l'environnement de développement comprend la détermination d'une prédiction, en particulier du fait du déroulement d'une simulation, d'au moins une action imminente de la commande de machine (12).

10. Système selon la revendication 9, **caractérisé en ce que** la détermination de la prédiction est terminée avant qu'une action imminente ou la première des actions imminentes de la commande machine (12) n'ait commencé.

11. Système selon les revendications 8 à 10, **caractérisé en ce qu'**une réaction de l'environnement de développement comprend un impact de la prédiction sur la commande de machine (12), en particulier l'arrêt de la machine.

12. Procédé de rédaction de programmes machine (6), en particulier de programmes pour robots, dans l'environnement ou les environnements de développement (2) et de commande d'au moins une machine, en particulier d'un robot, par l'intermédiaire de la ou des commandes de machine (12) au moyen d'un système selon l'une quelconque des revendications précédentes, la ou les commandes de machine (12) étant reproduites dans l'environnement ou les environnements de développement (2) et les données de l'environnement ou des environnements de développement (2) étant transmises régulièrement à la ou aux commandes de machine (12) et/ou inversement.

13. Produit-programme informatique comprenant un code de programme qui est mis en mémoire sur au moins un support lisible par une machine et qui exécute un procédé selon la revendication 12 lorsqu'il se déroule dans un système selon l'une quelconque des revendications 1 à 11.
